# FASCICULE DE BREVET EUROPEEN

(11) **EP 1 152 137 B1**
(45) Date de publication et mention de la délivrance du brevet: **19.01.2005**
(21) Numéro de dépôt: 01401086.2
(22) Date de dépôt: 26.04.2001
(51) Int. Cl.: F01N 11/00

(54) **Procédé de détection de l'état d'un catalyseur intégré dans une ligne d'échappement d'un moteur à combustion interne**
Verfahren zur Erkennung der Betriebsbereitschaft eines Katalysator für den Auspuff einer Brennkraftmaschine
Method for detecting the state of an engine exhaust gas catalyst

(30) Priorité: 04.05.2000 FR 0005732
(43) Date de publication de la demande: 07.11.2001
(73) Titulaire: Peugeot Citroen Automobiles SA, 92200 Neuilly sur Seine (FR)
(72) Inventeur: Aguerre, Frédéric, 75012 Paris (FR)
(74) Mandataire: Lanceplaine, Jean-Claude

(56) Documents cités:
- EP-A- 0 690 213
- EP-A- 0 735 250
- EP-A- 0 872 633
- DE-A- 19 847 874
- US-A- 5 992 142

## Description

La présente invention concerne un procédé de détection de l'état d'un catalyseur intégré dans une ligne d'échappement d'un moteur à combustion interne essence ou Diesel.

Les gaz d'échappement des moteurs à combustion interne fonctionnant en mélange dit "pauvre" c'est à dire avec une richesse du mélange air/carburant à une valeur inférieure au mélange stoechiométrique, contiennent différents polluants dont il est nécessaire de limiter au maximum les rejets dans l'atmosphère.

Ces polluants sont constitués principalement par du monoxyde de carbone CO, des hydrocarbures imbrûlés HC et des oxydes d'azote NOx.

La réglementation concernant les normes de pollution des véhicules automobiles a tendance à devenir de plus en plus sévère de sorte que les limites supérieures fixées de rejet des différents polluants ont tendance à devenir de plus en plus basses dans les nouvelles réglementations.

Pour satisfaire à ces réglementations, il est connu d'intercaler sur la ligne d'échappement entre les tubulures d'échappement du moteur et le pot de détente, un pot catalytique qui est le plus souvent constitué par une enveloppe métallique contenant une structure imprégnée d'un matériau catalyseur présentant une très grande surface de contact pour les gaz d'échappement traversant le pot catalytique.

Par exemple, dans le cas des moteurs fonctionnant en mélange pauvre, ces systèmes de dépollution sont généralement constitués par un catalyseur de type "piège à NOx".

Ce type de catalyseur ne fonctionne pas en continu et implique une gestion particulière du moteur à combustion interne.

Pendant une première phase, le moteur fonctionne normalement en mélange pauvre et les oxydes d'azote sont stockés dans le catalyseur.

Cependant, après une certaine période d'utilisation, une accumulation d'oxyde d'azote dans le catalyseur entraîne une baisse d'efficacité de ce dernier.

Pour éviter cette baisse de rendement du catalyseur, il est nécessaire de passer à une seconde phase dite phase de régénération du catalyseur. Au cours de cette phase, la richesse du mélange air/carburant du moteur est réglée à une valeur supérieure au mélange stoechiométrique si bien que les oxydes d'azote sont relâchés, puis réduit dans le catalyseur. Une sonde à oxygène de type tout ou rien placée derrière ce catalyseur permet de contrôler la fin de cette phase de régénération.

Ainsi, la stratégie utilisée jusqu'à présent permet, dans un état donné et connu du catalyseur, d'assurer le contrôle des émissions d'oxyde d'azote du moteur.

Toutefois, l'état du catalyseur peut varier dans le temps et cette variation provoque une dégradation des performances dudit catalyseur.

En effet, le catalyseur est sensible au soufre contenu dans le carburant et, en s'accumulant dans ce catalyseur, le soufre diminue l'efficacité de stockage des oxydes d'azote.

De plus, le catalyseur qui est soumis à des oxydants et/ou à des températures élevées, vieillit dans le temps et ses performances se dégradent.

L'invention a pour but de proposer un procédé de détection des variations de l'état d'un catalyseur intégré dans une ligne d'échappement d'un moteur à combustion interne.

L'invention a donc pour objet un procédé de détection de l'état d'un catalyseur de type piège à NOx intégré dans une ligne d'échappement d'un moteur à combustion interne, caractérisé en ce que :
- on maintient la richesse du mélange air/carburant du moteur à une valeur inférieure au mélange stoechiométrique, pendant une durée supérieure à la durée en fonctionnement normal du piège à NOx,
- on recycle à l'admission du moteur une partie des gaz d'échappement,
- on augmente la quantité d'oxydes d'azote émise par le moteur pour saturer le catalyseur,
- on modélise l'état du catalyseur,
- on détecte le seuil de saturation dudit catalyseur,
- on règle, dès que ce seuil de saturation est obtenu, la richesse du mélange air/carburant du moteur à une valeur supérieure au mélange stoechiométrique pour régénérer le catalyseur,
- on mesure la richesse des gaz d'échappement à la sortie du catalyseur,
- et dès que la richesse des gaz d'échappement est supérieure au mélange stoechiométrique, on règle la richesse du mélange air/carburant du moteur à ladite valeur inférieure de ce mélange pour arrêter la régénération du catalyseur.

Selon d'autres caractéristiques de l'invention :
- on augmente la quantité d'oxydes d'azote émise par le moteur en réalisant le taux de recyclage des gaz d'échappement,
- on mesure la richesse des gaz d'échappement au moyen d'une sonde à oxygène de type tout ou rien placée dans la ligne d'échappement à la sortie du catalyseur,
- on détermine l'état du catalyseur à partir des conditions de saturation et de régénération dudit catalyseur,
- les conditions de saturation du catalyseur sont déterminées en fonction de la température du catalyseur, de la concentration des oxydes d'azote en sortie du moteur et du débit du moteur pendant la phase de saturation,
- les conditions de régénération du catalyseur sont déterminées en fonction du débit du moteur pendant la phase de régénération, de la richesse de consigne pendant cette phase et du temps écoulé entre le début de ladite phase et le basculement de la sonde à oxygène,
- un temps déterminé s'écoule entre le basculement de la sonde à oxygène et le passage en mélange pauvre pour régénérer complètement le catalyseur.

Les caractéristiques et avantages de l'invention apparaîtront au cours de la description qui va suivre, donnée à titre d'exemple et faite en référence aux dessins annexés, sur lesquels :
- la Fig. 1 est une vue schématique en élévation d'une ligne d'échappement d'un moteur à combustion interne équipée d'un catalyseur d'élimination des oxydes d'azote,
- la Fig. 2 représente des courbes montrant l'efficacité de conversion du catalyseur en fonction du temps,
- la Fig. 3 représente une courbé montrant l'efficacité de conversion du catalyseur en fonction de la température du matériau constituant ce catalyseur,
- la Fig. 4 représente une courbe montrant le seuil de saturation du catalyseur en fonction du temps.

Le procédé de détection de l'état d'un catalyseur, selon l'invention, s'applique d'une manière générale au moteur à combustion interne essence ou Diesel fonctionnant en mélange pauvre, c'est à dire avec une richesse du mélange air/carburant du moteur inférieure au mélange stoechiométrique.

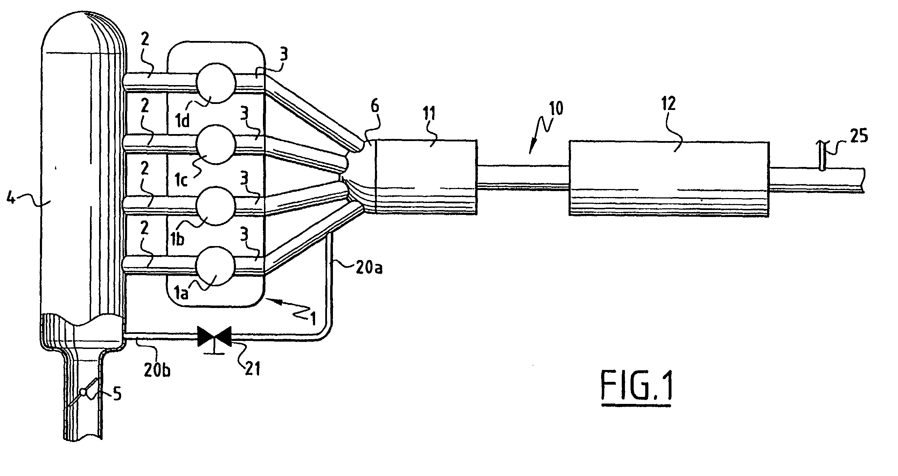

A titre d'exemple, on a représenté sur la Fig. 1 un moteur à quatre cylindres à allumage commandé désigné dans son ensemble par la référence 1 et auquel est associé un système d'injection directe, non représenté, assurant l'injection dans les quatre cylindres 1a, 1b,1c et 1d du moteur.

De manière classique, le système d'injection directe est commandé par un système d'alimentation en carburant à haute pression, non représenté, au niveau de chacun des cylindres 1a, 1b, 1c et 1d du moteur 1. La culasse est traversée par un conduit d'admission 2 d'air et par un conduit d'échappement 3 des gaz pour chaque cylindre.

Les conduits d'admission 2 d'air sont reliés chacun à un collecteur d'admission 4 muni à son entrée d'un papillon d'admission 5 et les conduits d'échappement sont reliés chacun à un collecteur d'échappement 6 recevant les gaz d'échappement des cylindres 1a,1b, 1c et 1d du moteur 1.

Ce moteur 1 est associé à une ligne principale d'échappement désignée par la référence générale 10 reliée par l'une de ses extrémités au collecteur d'échappement 6 et comportant un précatalyseur 11 disposé au plus près de la sortie de la culasse du moteur 1.

Ce précatalyseur 11 est destiné à oxyder le monoxyde de carbone et les hydrocarbures contenus dans les gaz d'échappement en mélange pauvre et est suivi d'un catalyseur 12 réalisé sous la forme d'un piège à NOx, c'est à dire un dispositif de dépollution permettant d'éliminer les oxydes d'azote dans les gaz d'échappement.

Par ailleurs, une partie de ces gaz d'échappement est recyclée vers le collecteur d'admission 4 afin de diminuer la quantité des oxydes d'azote émise par ces gaz. La technique consiste donc à réinjecter suivant les conditions de fonctionnement du moteur 1, une partie des gaz d'échappement dans les chambres de combustion des cylindres 1a, 1b,1c et 1d dudit moteur 1, ce qui a pour effet de réduire en proportion la quantité de gaz comburant et donc d'abaisser la température de combustion, d'où une diminution de la production des NOx ou oxydes d'azote.

A cet effet, le moteur 1 est équipé d'une ligne de recyclage 20 des gaz reliés à l'une 20a de ses extrémités à au moins un conduit d'échappement 3 et à son autre extrémité 20b au collecteur d'admission 4 raccordé aux cylindres 1 a, 1 b, 1 c et 1 d.

La ligne de recyclage 20 est munie d'une vanne 21 de commande et de réglage du recyclage des gaz d'admission du moteur 1.

Suivant les conditions de fonctionnement de ce moteur 1, la vanne 21 est ouverte ou fermée et en fonction de la position d'ouverture de cette vanne 21, une partie plus ou moins importante des gaz d'échappement est réinjectée dans les chambres de combustion des cylindres 1a, 1b, 1c et 1d ce qui a pour effet de diminuer la production des oxydes d'azote ou NOx.

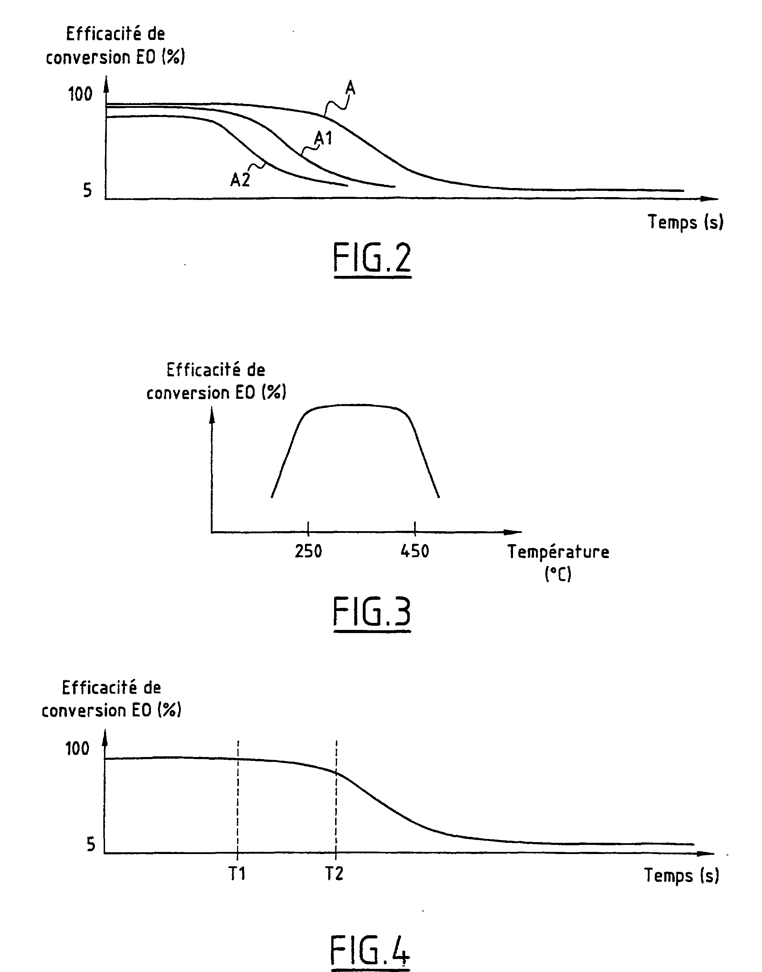

Ainsi que représenté sur la courbe A de la Fig. 2, lorsqu'une phase de stockage des oxydes d'azote débute, le catalyseur 12 ou piège à NOx est vide et l'efficacité de conversion E0 de ce catalyseur 12 est excellente si ce catalyseur 12 se trouve dans sa plage de températures de fonctionnement.

A titre d'exemple, la Fig. 3 représente l'efficacité de conversion E0 du catalyseur 12 en fonction de la température du matériau constituant ce catalyseur 12 et cette efficacité de conversion est maximale lorsque la température de ce matériau est comprise entre 250 et 450°C.

Par ailleurs, le vieillissement thermique ainsi que l'empoisonnement du catalyseur 12 par le soufre contenu dans le carburant ont pour conséquence une diminution de la capacité de stockage de ce catalyseur 12, puis une diminution de l'efficacité de conversion, comme représenté par les courbes A1 et A2 de la Fig. 2.

Comme le montre la courbe représentée à la Fig. 4, la courbe d'efficacité du catalyseur 12 décroît fortement à partir d'un certain seuil de saturation.

En utilisation courante du catalyseur 12 et dans le but de maintenir une bonne capacité de stockage des oxydes d'azote dans ce catalyseur 12, on déclenche la régénération dudit catalyseur 12 à partir d'un point situé en amont ou au voisinage de ce seuil de saturation de façon à obtenir une bonne efficacité de conversion moyenne du catalyseur 12. Cette disposition conduit à des temps maximaux de stockage de l'ordre de T1.

Le vieillissement du catalyseur 12 entraîne une dégradation qui est d'abord sensible au-delà du point de régénération optimal et devient ensuite sensible sur toute l'étendue de la course.

Pour déterminer l'état du catalyseur 12, le but n'est plus de garder l'efficacité de conversion optimale, mais d'être sûr d'avoir stocké des oxydes d'azote dans la plus grande partie des sites actifs.

Le catalyseur 12 est donc saturé bien au-delà de l'état de saturation utilisé en service normal ce qui conduit à des temps de stockage égaux ou supérieurs à T2 ainsi que représenté à la Fig. 4.

Le procédé selon l'invention consiste donc en une stratégie de contrôle du moteur qui permet de déterminer l'état du catalyseur 12. La connaissance de cet état est essentielle pour adapter les réglages de contrôle du catalyseur 12 ou pour statuer sur la nécessité de purger le soufre contenu dans ce catalyseur.

Au cours d'une première phase, on sature complètement le catalyseur 12 en oxydes d'azote en augmentant le temps passé en mélange pauvre par rapport au fonctionnement normal du système. Ce temps est déterminé au moyen d'un modèle fonction de la température du catalyseur, du débit du gaz d'échappement et de la concentration des NOx en sortie du moteur.

Ainsi, pendant cette phase, on maintient la richesse du mélange air/carburant du moteur 1 à une valeur inférieure au mélange stoechiométrique de façon à rester constamment en mélange pauvre. On recycle à l'admission du moteur 1 une partie des gaz d'échappement par la ligne de recyclage 20 et en ouvrant la vanne 21.

Par ailleurs, pour accélérer le phénomène de saturation du catalyseur 12, on augmente la quantité d'oxydes d'azote émise par le moteur 1 en fermant partiellement ou complètement la vanne 21 pour réduire le taux de recyclage des gaz d'échappement 20 par la ligne 21.

Dès que les calculs issus du modèle indiquent que le seuil de saturation est atteint, le moteur 1 est géré de façon à déclencher une phase de régénération du système.

Pour cela, on règle la richesse du mélange air/carburant du moteur 1 à une valeur supérieure au mélange stoechiométrique pour régénérer le catalyseur 12.

On mesure la richesse des gaz d'échappement à la sortie du catalyseur 12 au moyen d'une sonde à oxygène 25 de type tout ou rien placée dans la ligne d'échappement 10 à la sortie dudit catalyseur 12. Cette phase de régénération, prolongée par rapport à une phase de régénération normale, dure tant que le signal de cette sonde à oxygène 25 n'a pas indiqué la présence de gaz ayant une richesse supérieure au mélange stoechiométrique.

Lorsque la richesse des gaz d'échappement devient supérieure à ce mélange stoechiométrique, on règle la richesse du mélange air/carburant du moteur 1 a une valeur inférieure à ce mélange stcechiométrique pour que le moteur fonctionne en mélange pauvre ce qui arrête la régénération du catalyseur 12.

Si l'on veut s'assurer que le catalyseur est complètement régénéré, on peut laisser s'écouler un laps de temps supplémentaire, par exemple de l'ordre de 10 secondes entre le basculement de la sonde et le passage en mélange pauvre.

Les conditions de saturation de ce catalyseur sont déterminées en fonction de la température du matériau composant ledit catalyseur, de la concentration des oxydes d'azote en sortie du moteur 1 et du débit du moteur 1 pendant la phase de saturation.

Par ailleurs, les conditions de régénération du catalyseur sont déterminées en fonction du débit du moteur 1 pendant la phase de régénération, de la richesse de consigne pendant cette phase et du temps écoulé entre le début de ladite phase de régénération et le basculement de la sonde à oxygène 25.

La connaissance, d'une part, des conditions de saturation du piège à NOx et des conditions de régénération du catalyseur, d'autre part, permet de calculer, durant la phase de régénération de celui-ci, un indicateur de l'état du piège à NOx, grâce à un modèle ou à des mesures préalables.

Le procédé selon l'invention permet de détecter l'état d'un piège à NOx intégré dans une ligne d'échappement d'un moteur à combustion interne fonctionnant en mélange pauvre et d'adapter les conditions de fonctionnement du piège à NOx à son état réel.

## Revendications

1. Procédé de détection de l'état d'un catalyseur (12), de type piège à NOx, intégré dans une ligne d'échappement (10) d'un moteur (1) à combustion interne, **caractérisé en ce que** :
- on maintient la richesse du mélange air/carburant du moteur (1) à une valeur inférieure au mélange stoechiométrique, pendant une durée supérieure à la durée en fonctionnement normal du piège à NOx,
- on recycle à l'admission (4) du moteur (1) une partie des gaz d'échappement,
- on augmente la quantité d'oxydes d'azote émise par le moteur (1) pour saturer le catalyseur (12),
- on modélise l'état du catalyseur (12),
- on détecte le seuil de saturation dudit catalyseur (12),
- on règle, dès que ce seuil de saturation est obtenu, la richesse du mélange air/carburant du moteur (1) à une valeur supérieure au mélange stoechiométrique pour régénérer le catalyseur (12),
- on mesure la richesse des gaz d'échappement à la sortie du catalyseur (12),
- et dès que la richesse des gaz d'échappement est supérieure au mélange stoechiométrique, on règle la richesse du mélange air/carburant du moteur (1) à ladite valeur inférieure de ce mélange pour arrêter la régénération du catalyseur (12).

2. Procédé selon la revendication 1, **caractérisé en ce que** l'on augmente la quantité d'oxydes d'azote émise par le moteur en réduisant le taux de recyclage des gaz d'échappement.

3. Procédé selon la revendication 1, **caractérisé en ce que** l'on mesure la richesse des gaz d 'échappement au moyen d'une sonde à oxygène (25) de type tout ou rien placée dans la ligne d'échappement (10) à la sortie du catalyseur (12).

4. Procédé selon l'une quelconque des revendications précédentes, **caractérisé en ce que** l'on détermine l'état du catalyseur (12) à partir des conditions de saturation et de régénération dudit catalyseur (12).

5. Procédé selon la revendication 4, **caractérisé en ce que** les conditions de saturation du catalyseur (12) sont déterminées en fonction de la température de ce catalyseur (12), de la concentration des oxydes d'azote en sortie du moteur (1) et du débit du moteur (1) pendant la phase de saturation.

6. Procédé selon la revendication 4, **caractérisé en ce que** les conditions de régénération du catalyseur (12) sont déterminées en fonction du débit du moteur (1) pendant la phase de régénération, de la richesse de consigne pendant cette phase et du temps écoulé entre le début de ladite phase de régénération et le basculement de la sonde à oxygène (25).

7. Procédé selon la revendication 6, **caractérisé en ce qu'**un temps déterminé s'écoule entre le basculement de la sonde à oxygène (25) et le passage en mélange pauvre pour régénérer complètement le catalyseur.

## Patentansprüche

1. Verfahren zur Feststellung des Zustands eines Katalysators (12) von der Art einer NOx-Falle, der in eine Auspuffleitung (10) eines Brennkraftmotors (1) integriert ist, **dadurch gekennzeichnet, daß** man:
- während einer Zeitspanne, die größer ist als die normale Funktionsdauer der NOx-Falle, die Fettigkeit des Kraftstoff/Luft-Gemisches des Motors (1) auf einem Wert unterhalb des stoichiometrischen Verhältnisses hält,
- einen Teil der Auspuffgase zur Ansaugseite (4) des Motors (1) zurückführt,
- die Menge der vom Motor (1) emittierten Stickoxide erhöht, um den Katalysator (12) zu sättigen,
- den Zustand des Katalysators (12) darstellt,
- das Sättigungsniveau dieses Katalysators (12) feststellt.
- sobald dieses Sättigungsniveau erreicht ist, die Fettigkeit des Luft/Kraftstoff-Gemisches des Motors (1) auf einen Wert oberhalb des stoichiometrischen Verhältnisses regelt, um den Katalysator (12) zu regenerieren,
- die Fettigkeit der Auspuffgase am Ausgang des Katalysators (12) mißt,
- und, sobald die Fettigkeit der Auspuffgase oberhalb des stoichiometrischen Verhältnisses ist, die Fettigkeit des Luft/Kraftstoff-Gemisches des Motors (1) auf den genannten unteren Wert dieses Gemisches regelt, um die Regeneration des Katalysators (12) zu beenden.

2. Verfahren nach Anspruch 1, **dadurch gekennzeichnet, daß** man die Menge der vom Motor emittierten Stickoxide erhöht, indem man die Abgas-Rückführungsrate verringert.

3. Verfahren nach Anspruch 1, **dadurch gekennzeichnet, daß** man die Fettigkeit der Auspuffgase mit Hilfe einer "Ja/Nein"-Sauerstoffsonde (25) mißt, die am Ausgang des Katalysators (12) in der Auspuffleitung (10) angeordnet ist.

4. Verfahren nach einem der vorstehenden Ansprüche, **dadurch gekennzeichnet, daß** man den Zustand des Katalysators (12) anhand der Sättigungs- und Regeneratiorisbedingungen des Katalysators (12) bestimmt.

5. Verfahren nach Anspruch 4, **dadurch gekennzeichnet, daß** die Sättigungsbedingungen des Katalysators (12) als Funktion der Temperatur dieses Katalysators (12), der Stikkoxidkonzentration am Ausgang des Motors (1) und des Durchsatzes des Motors (1) während der Sättigungsphase bestimmt werden.

6. Verfahren nach Anspruch 4, **dadurch gekennzeichnet, daß** die Regenerationsbedingungen des Katalysators (12) als Funktion des Durchsatzes des Motors (1) während der Sättigungsphase, der Ziel-Fettigkeit während dieser Phase, und der zwischen dem Beginn der Regenerationsphase und dem Umkippen der Sauerstoffsonde (25) abgelaufenen Zeit bestimmt werden.

7. Verfahren nach Anspruch 6, **dadurch gekennzeichnet, daß** zwischen dem Umkippen der Sauerstoffsonde (25) und dem Übergang auf mageres Gemisch eine bestimmte Zeit vergeht, damit der Katalysator vollständig regeneriert wird.

## Claims

1. Method for detecting the state of a catalyst (12), of the NOx trap type, which is integrated into an exhaust system (10) of an internal combustion engine (1), **characterised in that**:
- the richness of the air/fuel mixture of the engine (1) is maintained at a value less than the stoichiometric mixture, for a time greater than the time of normal operation of the NOx trap,
- a part of the exhaust gases is recycled at the inlet (4) of the engine (1),
- the quantity of nitrogen oxides emitted by the engine (1) is increased in order to saturate the catalyst (12),
- the state of the catalyst (12) is modelled,
- the saturation threshold of said catalyst (12) is detected,
- as soon as this saturation threshold is obtained, the richness of the air/fuel mixture of the engine (1) is regulated at a value greater than the stoichiometric mixture in order to regenerate the catalyst (12),
- the richness of the exhaust gases at the outlet of the catalyst (12) is measured,
- and as soon as the richness of the exhaust gases is greater than the stoichiometric mixture, the richness of the air/fuel mixture of the engine (1) is regulated at said lower value of this mixture, in order to halt the regeneration of the catalyst (12).

2. Method according to claim 1, **characterised in that** the quantity of nitrogen oxides emitted by the engine is increased by reducing the recycling ratio of the exhaust gases.

3. Method according to claim 1, **characterised in that** the richness of the exhaust gases is measured by means of an oxygen sensor (25) of the all or nothing type, which is placed in the exhaust system (10), at the outlet of the catalyst (12).

4. Method according to any of the preceding claims, **characterised in that** the state of the catalyst (12) is determined from the saturation and regeneration conditions of said catalyst (12).

5. Method according to claim 4, **characterised in that** the saturation conditions of the catalyst (12) are determined as a function of the temperature of this catalyst (12), of the concentration of the nitrogen oxides at the outlet of the engine (1) and of the discharge of the engine (1) during the saturation phase.

6. Method according to claim 4, **characterised in that** the regeneration conditions of the catalyst (12) are determined as a function of the discharge of the engine (1) during the regeneration phase, of the desired richness during this phase and of the time elapsed between the start of said regeneration phase and the switching of the oxygen sensor (25).

7. Method according to claim 6, **characterised in that** a determined time elapses between the switching of the oxygen sensor (25) and the change to lean mixture in order to regenerate the catalyst completely.
